# EUROPÄISCHE PATENTANMELDUNG

(11) **EP 0 845 208 A2**
(43) Veröffentlichungstag der Anmeldung: **03.06.1998**
(21) Anmeldenummer: 97810835.5
(22) Anmeldetag: 07.11.1997
(51) Int. Cl.: A01K 15/02

(54) **Verfahren und Vorrichtung zur Angewöhnung von Rindvieh, beim Koten oder Harnen im Stall soweit zurückzutreten, dass die Exkremente hinter dem Läger abgesetzt werden**

(30) Priorität: 13.11.1996 CH 96028/10
(71) Anmelder: Albrecht, Heinz, 7000 Chur (CH)
(72) Erfinder: Albrecht, Heinz, 7000 Chur (CH)
(74) Vertreter: Riederer, Conrad A., Dr.

(57) **Zusammenfassung**

Kuhtrainer (1) mit einer Warneinrichtung (10) zur Warnung der Kuh vor einer allfälligen Bestrafung bei Berührung mit dem unter Spannung setzbaren Bügel (11), indem die Kuh die Wameinrichtung (10) mit dem Tastsinn auf dem Rücken (6) wahrnimmt, bevor sie einen Stromschlag durch den Bügel (11) riskiert.

## Beschreibung

Die vorliegende Erfindung betrifft ein Verfahren zur Angewöhnung von Rindvieh, beim Koten oder Harnen im Stall soweit nach hinten zu treten, dass die Exkremente im dafür vorgesehenen Bereich hinter dem Läger abgesetzt werden, bei welchem das Tier bei Fehlverhalten z.B. mit einem Stromstoss bestraft wird. Die Erfindung betrifft auch eine Vorrichtung mit dem gleichen Zweck, mit einem an einer Spannungsquelle angeschlossenen elektrischen Leiter über dem Läger und daran einem Bügel mit wenigstens einem Arm und einem Kontaktglied in einem Abstand über dem Rücken des Tieres, über welches Kontaktglied das Tier bei Fehlverhalten einem Stromschlag ausgesetzt werden kann.

Die in der Schweiz heute allgemein gebräuchliche Vorrichtung zur Angewöhnung der Kühe, im Stall ihre Exkremente hinter einer sogenannten Kotkante abzusetzen, arbeitet mit Bestrafung der sich falsch verhaltenden Kuh mittels eines Stromschlages. Der sogenannte Kuhtrainer besteht aus einem über den Lägern angebrachten Vierkant-Hohlstab aus Aluminium und dem über jeder Kuh daran angebrachten, in der Höhe verstellbaren Bügel, sowie einer damit verbundenen Spannungsquelle. Über ein speziell auf die Erfordemisse des Kuhtrainers ausgerichtetes Netzgerät werden Stromimpulse durch Hohlstab und Bügel geschickt. Wölbt nun eine Kuh unmittelbar vor dem Koten oder Hamen in arttypischer Weise ihren Rücken auf, und steht sie dabei zu weit vor der Kotkante, gerät sie in Kontakt mit dem Bügel. Der dabei verabreichte elektrische Schlag soll die Kuh dazu veranlassen, zurückzutreten und ihre Exkremente hinter dem Läger abzusetzen.

Die Sauberkeit in Ställen mit Kuhtrainer zeigt eindrucksvoll, dass Rindvieh diesen Dressurakt erfolgreich lernt. Dies ist auch dann der Fall, wenn der Kuhtrainer vorschriftsmässig nur während ein bis zwei Tagen in der Woche unter Spannung ist. Beobachtungen zeigen, dass die Kuh sehr genau den Ort des Bügels kennt und sich diesem erstaunlich annähern kann, ohne ihn zu berühren. Den Ort des Bügels hat sie dabei durch die ihr überraschend zugefügten Stromschläge kennengelernt.
So sehr der Vorteil eines durch Konditionierung der Kuh sauber gehaltenen Lägers und der damit vermiedenen Klauen-, Sprunggelenk-, Euter- und Zitzenprobleme und des stark verminderten Putzaufwandes geschätzt wird, ist die Diskussion um die Tiergerechtheit einer Konditionierung der Kuh mit elektrischen Schlägen nie verstummt. Während in der Vergangenheit die Freiheit von äusserlich erkennbaren Schäden und Verletzungen das wichtigste Kriterium für eine tiergerechte Haltung bildete, besinnt man sich heute auf Kriterien wie Haltung der Nutztiere mit nicht dauernd eingeschränkter Bewegungsfreiheit, Freiheit von Schmerzen, Leiden oder Angst. Der elektrische Kuhtrainer aber beeinträchtigt dauernd das Vieh in seinem arttypischen Verhalten, insbesondere auch im Putz- und Brunstverhalten. Die Kühe erhalten die Stromschläge nämlich zu etwa 90% bei Berührungen, welche nicht im Zusammenhang mit Koten oder Harnen stehen. Es ist sogar ein Zusammenhang zwischen gehäuften Problemen bei der Brunsterkennung und dem Einsatz von Kuhtrainern nachgewiesen worden (Eyrich et al., 1989, zitiert in: Thomas Oswald, "Der Kuhtrainer", 1992, FAT, Eidg. Forschungsanstalt für Betriebswirtschaft und Landtechnik, CH-8356 Tänikon TG). Der Gebrauch des elektrischen Kuhtrainers soll denn auch in der Schweiz im biologischen Landbau ab dem Jahr 2002 nicht mehr zugelassen werden. Trotz intensiver und jahrelanger Suche nach Alternativen wurde kein durchsetzbares besseres Verfahren zur Sauberhaltung des Lägers gefunden, weshalb sich bis jetzt tierschützerische Kreise mit der Bestrebung, den Kuhtrainer insgesamt zu verbieten, noch nicht durchsetzen konnten. Die Absicht beispielsweise, mittels gegen den Kopf der Kühe gerichteten Druckluftdüsen die Kühe zu konditionieren, verpasste die erhoffte Wirkung, und die Kühe setzten diese Druckluft bald zum eigenen Wohl gegen lästige Fliegen ein.

Aus den US-Patentschriften 4,134,363 und 3,955,535 sind seit über 20 Jahren Kuhtrainer bekannt, welche einen von einem unter Spannung stehenden Draht kopfüber herunterhängenden, T-fömigen Bügel aus einem gezackten, horizontalen Kontaktbalken und einem einzigen, mittig daran angeordneten, in der Länge verstellbaren Stamm oder Arm aufweisen. Zwischen einer Klammer zum Einhängen des Bügels in den elektrischen Draht und dem Arm ist ein Unterbrechungsschalter vorgesehen. Sobald der Arm um einen gewissen Weg nach oben verschoben wird, wird mit dem Schalter ein elektrischer Kontakt zwischen Draht und Arm hergestellt. Mit diesem Schalter wird bezweckt, dass sich im Stall aufhaltendes Personal bei einer unbeabsichtigten Berührung des Bügels nicht überraschend elektrisiert wird. Wenn die Kuh jedoch zum Koten den Rücken unter dem Kontaktbalken krümmt, stösst sie den Kontaktbalken und damit den Arm um ca. 1 cm aufwärts und stellt so den Kontakt her. Dadurch kann ein elektrischer Impuls im Leiter über Arm und Kontaktbalken auf das sich falsch verhaltende Tier einwirken. Zur Sicherstellung der Ausschaltbewegung wird eine Unterstützung der Schwerkraft durch Federmittel vorgeschlagen.

Es ist nun Aufgabe der vorliegenden Erfindung, ein Verfahren und eine Vorrichtung vorzuschlagen, mit welchen einerseits eine Konditionierung der Kuh mittels Bestrafen von Fehlverhalten, vorzugsweise mit einem bekanntlich wirksamen Stromstoss, erreicht wird und andererseits den berechtigten Forderungen nach tier- und artgerechterer Tierhaltung entgegengekommen werden kann. Insbesondere soll das Tier möglichst nur dann bestraft werden, wenn es zu weit vorne auf dem Läger steht und bewusst eine Strafe riskierend Koten oder Harnen will. Zudem soll diese Verbesserung der Stalleinrichtung kostengünstig sein.

Diese Aufgabe wird erfindungsgemäss dadurch gelöst, dass das Tier bei Eindringen in einen definierten straffreien Grenzbereich seiner Bewegungsfreiheit über mindestens einen seiner Sinne automatisch vor einer drohenden Bestrafung deutlich gewarnt wird. Eine solche Warnung kann beispielsweise akustisch oder optisch geschehen. Vorgezogen wird eine Wamung über den Tastsinn. Die Warnung bringt der Kuh ins Bewusstsein, dass sie bei Fortsetzen der Bewegung eine Strafe erhalten könnte.

Mit geschalteten Kuhtrainern mit einem genügend grossen Widerstand gegen die unerwünschte Bewegung der Kuh (z.B. mit einem höheren Gewicht des Bügels als bei den bekannten geschalteten Kuhtrainern), kann die Kuh vor dem Stromschlag gewarnt werden. Dass das Prinzip der geschalteten Kuhtrainer im Zuge der Suche nach Alternativmöglichkeiten zum hier gebräuchlichen Kuhtrainer (nach Oswald) in den vergangenen Jahren aber keine entsprechende Anwendung erfahren hat, belegt, dass bisher nicht erkannt wurde, dass mittels einer Warnung der Kuh ihre Bestrafung vermieden werden kann.

Eine Untersuchung (Diplomarbeit von M. Zähner, an der ETH Zürich, 1997, "Vergleich aktiver und passiver Steuerungseinrichtungen zur Lägerreinhaltung bei Milchkühen im Anbindestall aus ethologischer und arbeitswirtschaftlicher Sicht") hat jedoch gezeigt, dass mit erfindungsgemäss umgerüsteten Kuhtrainern die Schläge, welche das Tier insgesamt erhält, um etwa 93% reduziert werden können. Schläge, welche das Tier nicht im Zusammenhang mit Kot- oder Harnverhalten erhält, können dadurch sogar von etwa 90% der Bügelkontakte beim Kuhtrainer nach Oswald auf unter 2 Prozent der Bügel- und Leistenkontakte reduziert werden. Die Anzahl erzieherischer Strafstösse bei Fehlverhalten der Kuh konnten etwa halbiert werden. Bei gleichzeitiger Aufrechterhaltung der für das Wohl der Tiere wertvollen Sauberkeit im Anbindestall kann daher mit einfachsten Mitteln der Forderung nach artgerechter Haltung sehr weitgehend entsprochen werden.

Eine Warnung des Tieres vor einem Stromstoss wird erfindungsgemäss mit einer Vorrichtung der genannten Gattung erreicht, bei welcher das Kontaktglied in ständigem elektrischen Kontakt mit der Spannungsquelle steht und ein Wamglied zwischen dem Rücken des Tieres und dem Kontaktglied angeordnet ist, bzw. mit einer Vorrichtung der genannten Gattung mit einem Schalter zwischen Kontaktglied und Leiter, welcher nach Anheben des Kontaktgliedes um einen gewissen Weg einen elektrischen Kontakt herstellt, wonach über das Kontaktglied das dieses anhebende Tier einem Stromschlag ausgesetzt werden kann, bei welcher das geschaltete Kontaktglied dank einem Widerstand gegen die unerwünschte, einschaltende Bewegung, welcher Widerstand vom Tier als Warnung wahrgenommen wird, als Warnglied dient.

Ein Warnglied zwischen dem Rücken des Tieres und dem Kontaktglied kann beispielsweise ein isolierter Stab, eine Profilkante, ein Seil oder ein Lichtstrahl mit entsprechenden Sensoren und z.B. einem optischen Blitzlicht sein. Eine solche Vorrichtung benötigt keinen Schalter zwischen Kontaktglied und Spannungsquelle, wodurch das Kontaktglied auch ohne Reinigungs- und Unterhaltarbeiten zuverlässig funktionsfähig bleibt.

Vorteilhaft erhält damit das Tier eine Bestrafung nicht mehr unvermittelt, da es bei Fehlverhalten durch die Sinne frühzeitig vor einer Strafe gewarnt wird. Damit kann dem Tier ermöglicht werden, sich freier und unvorsichtiger zu bewegen. Trotzdem verhindert die Bestrafung von Fehlverhalten, dass die Kuh zu weit vorne stehend kotet oder harnt.

Zweckmässigerweise wird ein Grenzbereich definiert, innerhalb welchem das Tier die Grenzen seiner Bewegungsfreiheit wahrnehmen kann. Das Tier wird auf ein Eindringen in den Grenzbereich aufmerksam gemacht, und kann diesen wieder verlassen, ohne dass es gestraft zu werden braucht. Dabei kann die Wahrnehmung der Grenze durch ein optisches oder akustisches Signal erfolgen, welches durch ein Eindringen in den Grenzbereich ausgelöst wird, z.B. indem Lichtschranken durch den sich hebenden Rücken der Kuh unterbrochen werden. Bevorzugt wird jedoch eine Wamung über den Tastsinn durch ein zum Kontaktglied parallel verlaufendes Warnglied, welches Warnglied beweglich oder verformbar ist. Dies ist mit einfachsten Mitteln erreichbar und es werden dazu auch am Warnglied keine Schalter benötigt. Ein solches Warnglied muss vom Tier bewegt werden, damit es mit dem Kontaktglied in Berührung kommt. Die Parameter, die den Grenzbereich der Bewegungsfreiheit des Tieres definieren, wie horizontaler und vertikaler Abstand zwischen Warn- und Strafeinrichtung sowie der allenfalls benötigte Druck, um den Grenzbereich zu durchqueren, sind vorteilhaft wählbar. Damit lässt sich individuell Rücksicht nehmen auf Temperament, Grösse und Verhalten des Tieres.

Vorteilhaft ist der Bügel mit zwei Armen am Leiter befestigt, wodurch er seitlich nicht ausschwenken und daher niemanden gefährden kann. Vorteilhaft ist eine Warneinrichtung mit einem Warnglied zusammen mit einem bestehenden Bügel oder mit einem neuen Bügel zusammen anstelle eines bestehenden Bügels am Leiter befestigt. Letzteres ermöglicht die Bügel durch solche mit einer strukturierten Oberfläche zu ersetzen, welche dadurch das Gewicht der Warneinrichtung tragen können, ohne dass die Gefahr besteht, dass das Kontaktglied nach und nach nach unten rutscht. Alternativ dazu ist eine Warneinrichtung mit einem Wamglied unabhängig vom Bügel am Leiter befestigt. Mit solchen Nachrüstteilen kann ein Ersatz der gesamten Anlage vermieden werden. Vorteilhaft wird das Warnglied mit Federmitteln und/oder durch die Schwerkraft in seiner Grundstellung gehalten. Vorteilhaft ist die Warneinrichtung oder das Warnglied wenigstens teilweise aus einem isolierenden Material, z.B. Holz, Kunststoff oder Gummi, wobei bei den beiden Letzteren auch die Elastizität des Materials genutzt werden kann.

Diese Warneinrichtungen sind zweckmässigerweise mit einem in Abstand zum unter Spannung setzbaren Bügel gehaltenen gespannten Drahtseil, Gummiseil, Stab oder Ähnlichem ausgerüstet. Eine Wameinrichtung kann aber auch aus einer Mehrzahl von isolierten Gewichten bestehen, die vom unter Spannung setzbaren Bügel herunterhängen.

Eine besonders vorteilhafte Warneinrichtung, deckt den unter Spannung setzbaren Bügel soweit isolierend ab, dass möglichst nur die unerwünschte Bewegung des Tieres bestraft wird. Andere zufällige Annäherungen an den unter Spannung setzbaren Bügel, zum Beispiel bei der Körperpflege, sind dadurch vorteilhaft weitgehend vor einem Stromschlag geschützt. Eine solche Warneinrichtung besteht zweckmässigerweise aus einem von oben über das Kontaktglied gestülpten U-Profil. Ein U-Profil ist sehr einfach aus Holz oder Kunststoff herstellbar und deckt das Kontaktglied nach drei Seiten ab. Es schützt das Tier auch weitgehend vor einer Berührung des Kontaktgliedes von der vierten Seite her. Dank seinem Gewicht liegt das U-Profil in Ruheposition auf dem Kontaktglied auf und kann z.B. nicht mit der Zunge angehoben werden. Seine unterste Kante ist in Abstand zum Kontaktglied und dient als Warnglied.

Vorteilhaft sind im Bereich der Arme des Bügels in einem solchen U-Profil Schlitze oder Löcher angeordnet, durch welche hindurch sich die Arme nach oben erstrecken. Das Profil kann in den Schlitzten oder Löchern entlang der Arme hoch- und niedergleiten. Es kann aber nicht aus dem Bügel herausspringen.

Vorteilhaft weist ein am Leiter in der Höhe verstellbarer Bügel im Bereich des Arms oder der Arme Rippen oder Rillen auf, damit er mit diesen in den Befestigungsklammern einrastet und durch das Gewicht der Warneinrichtung nicht nach unten verschoben werden kann.

Nachfolgend werden Ausführungsbeispiele der Erfindung unter Bezugnahme auf die Figuren beschrieben. Es zeigt:
- Fig. 1: ein dem Stand der Technik entsprechender Kuhtrainer mit kotender Kuh,
- Fig. 2: eine Warneinrichtung mit U-Schiene,
- Fig. 3: einen gebogenen Bügel mit integrierter Warneinrichtung,
- Fig. 4: einen H-förmigen Bügel mit integrierter Warneinrichtung,
- Fig. 5: eine Warneinrichtung an der Aufhängevorrichtung,
- Fig. 6: eine Warneinrichtung aus Kunststoff mit Metallstab,
- Fig. 7: eine auf den Bügel aufsteckbare Warneinrichtung,
- Fig. 8: eine weitere auf den Bügel aufsteckbare Wameinrichtung.

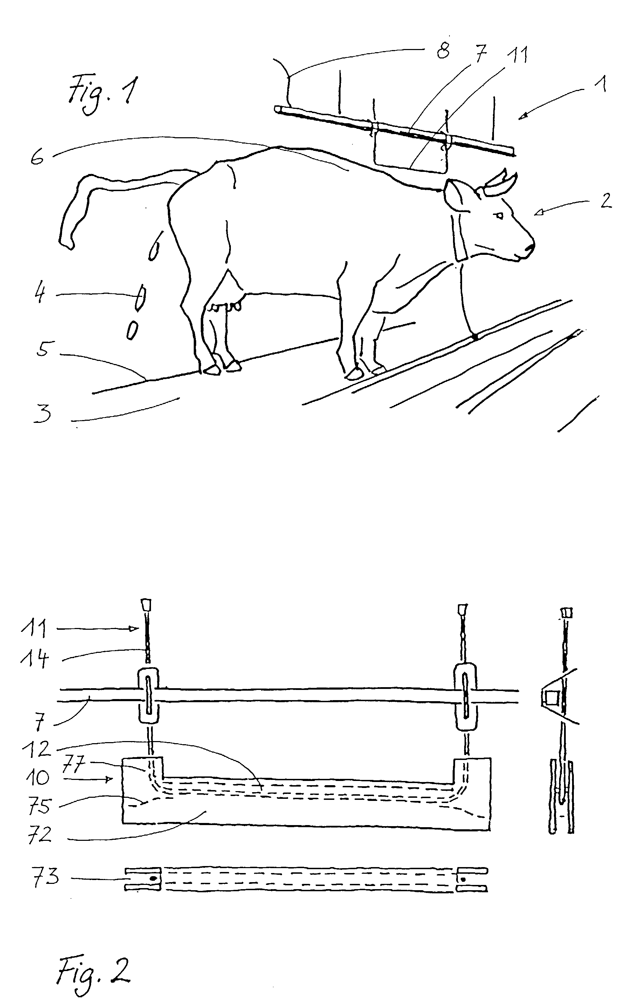

Figur 1 zeigt einen Kuhtrainer 1 mit kotender Kuh 2 auf dem Läger 3 stehend. Die Exkremente 4 fallen hinter die Kotkante 5. Die Kuh würde weiter vome stehend bei gleicher Haltung mit dem Rücken 6 den Bügel 11 berühren, welcher über die Aufhängevorrichtung 7 und das Kabel 8 mit der elektrischen Spannungsquelle verbunden ist.

Figuren 2, 5, 6, 7 und 8 zeigen Beispiele von Nachrüstteilen zum in der Schweiz üblichen Kuhtrainer. In entsprechender Abwandlung sind diese auch auf einen Kuhtrainer mit beispielsweise nur einem Arm 14 ebenso anwendbar. Figur 2 zeigt eine Warneinrichtung 10, welche aus einem isolierenden oder isolierten U-Profil besteht, welches über das Kontaktglied 12 des unter Spannung setzbaren Bügels 11 gestülpt ist. Vorteilhaft wird dadurch das Verhalten des Tieres, insbesondere das Putzverhalten, weniger beeinträchtigt, indem eine Berührung des Bügels 11 von der Seite her abgeschirmt ist. Das U-Profil weist seitlich Löcher oder Schlitze 73 auf mit denen es in die vertikalen Arme 14 des Bügels 11 eingehängt oder eingeführt ist. Die vertikalen Stäbe 14 dienen als Führung der Warneinrichtung 10 bei deren Bewegung durch den Tierrücken 6. Diese Warneinrichtung 10 kann mit einer Feder 75 versehen sein, die das U-Profil elastisch in Position hält.

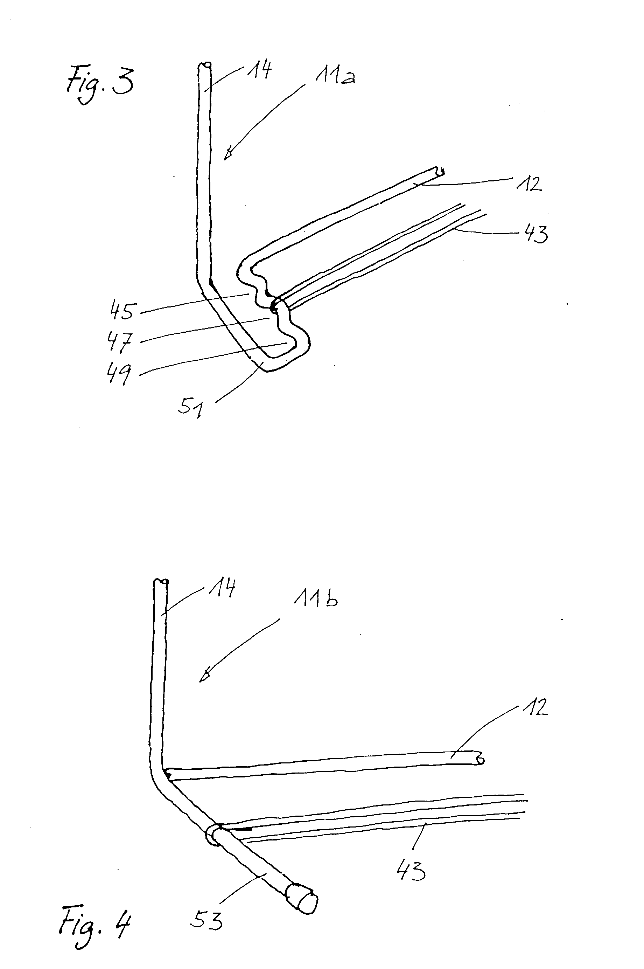

Figur 3 zeigt einen unter Spannung setzbaren Bügel 11a, dessen senkrechten Arme zweckmässigerweise so unter das horizontale Kontaktglied 12 hinunterreichen und sich wieder zu diesem hochwenden, dass im durch diese Kehre der Arme entstehenden Einhängteil 51 ein Seil 43 direkt im Bügel eingehängt werden kann. Zweckmässigerweise kann das Seil 43 ein geschlossenes elastisches Band oder Seil sein, welches über das Kontaktglied 12 des Bügels 11a geführt und in eine der beispielsweise 3 Einhängwellen 45, 47 und 49 im Einhängteil 51 eingehängt ist.

Der Einhängteil 51 des unter Spannung setzbaren Bügels 11a kann vorteilhaft zu den vertikalen Armen 14 des Bügels 11a abgewinkelt verlaufen. Diese Abwinkelung bewirkt, dass das Seil 43 seitlich des Kontaktgliedes 12 des Bügels 11a hochgedrückt wird. Somit ist die Gefahr verringert, dass das isolierende Seil den Kontakt mit dem Kontaktglied 12 verhindert.

Figur 4 zeigt eine Ausführung eines unter Spannung setzbaren Bügels 11b, welcher eine H-Form aufweist. Hier kann ein Seil 43 vorteilhaft von unten über den Einhängteil 53 eingefahren werden. Ist der Einhängteil 53 dieses unter Spannung setzbaren Bügels 11b abgewinkelt, so wird vorteilhaft das Seil 43, leicht von einem daran zerrenden Tier ausgehängt werden, und es wird auch vom hochdrückenden Tierrücken 6 weniger an das Kontaktglied 12 gepresst. So kann eine Berührung des unter Spannung setzbaren Bügels 11b mit dem Tierrücken 6 vom isolierenden Seil kaum verhindert werden.

Die Abwinkelung in den Bügeln 11a und 11b sind vorteilhaft so zu wählen, dass der Winkel stumpf ist, mit zunehmendem Abstand zwischen Warnglied und Kontaktglied sich das Warnglied also nach hinten und unten bewegt.

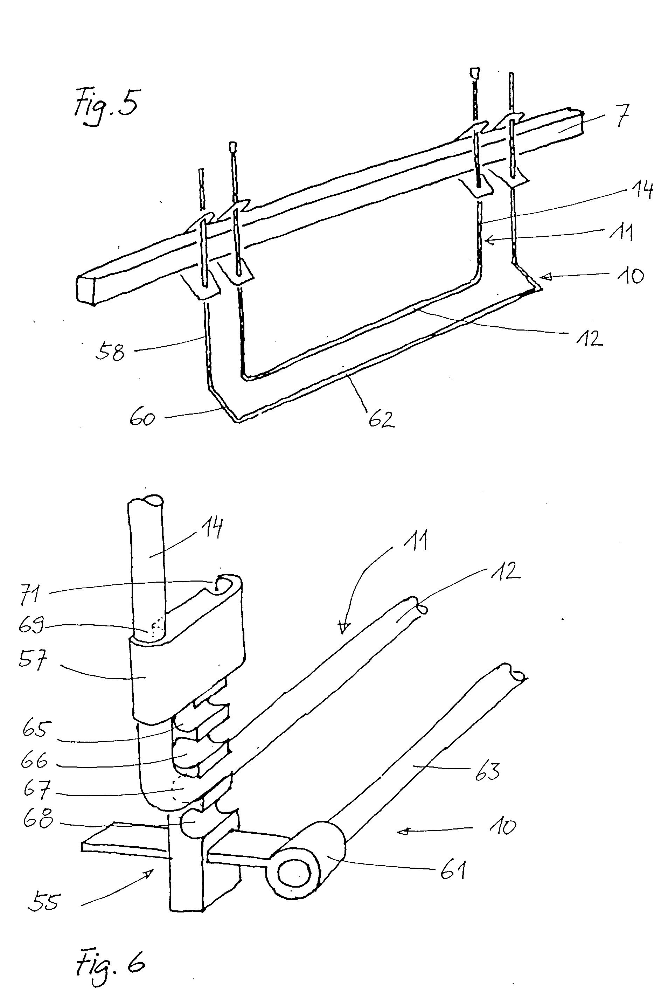

Figur 5 zeigt einen konventionellen unter Spannung setzbaren Bügel 11 eines Kuhtrainers am Vierkantrohr 7 der Aufhängevorrichtung und einen zweiten Bügel 58, dessen senkrechte Arme neben den senkrechten Armen 14 des Bügels 11 am gleichen Vierkantrohr 7 befestigt sind. Der Bügel 58 für die Wameinrichtung ist weiter gespannt als der unter Spannung setzbare Bügel 11, ist aus einem isolierenden und elastischen Material gefertigt, z.B. Kunststoff, und weist vorteilhaft eine Abwinkelung 60 auf mit einem stumpfen Winkel, die den horizontalen Warnstab 62 mit der gewünschten Federwirkung versieht.

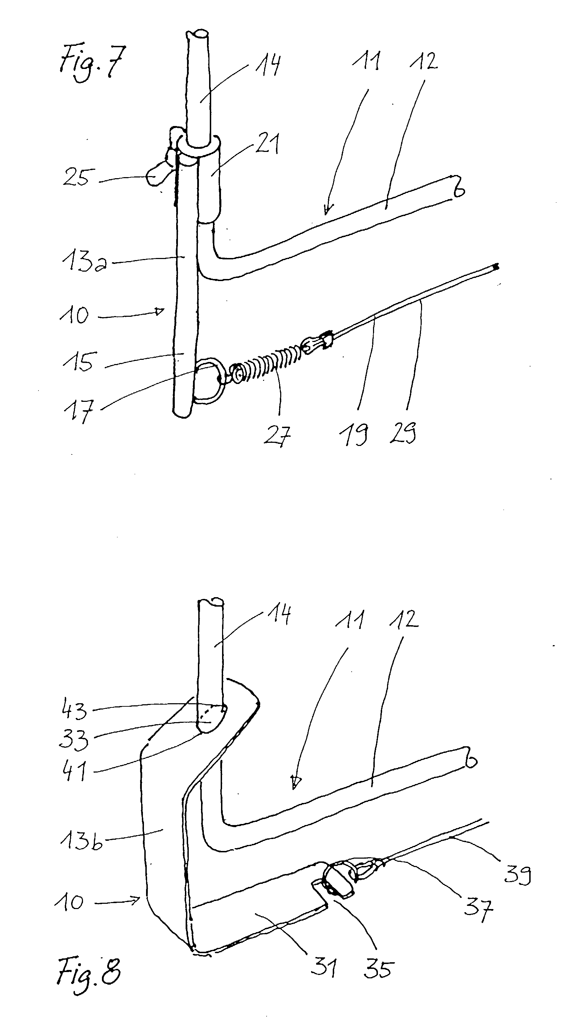

Figur 6 zeigt ein Nachrüstteil 55, bestehend aus einem in der Höhe verstellbaren Seitenteil 57, einem darin eingeführten Horizontalschieber 61 mit einem Stab 63 als Wamglied parallel zum Konaktglied 12 des unter Spannung setzbaren Bügels 11. Das Seitenteil weist z.B. 4 horizontale Rinnen 65 bis 68 auf, welche in den Horizontalstab 12 des unter Spannung setzbaren Bügels 11 eingeklinkt werden können und verschiedene Vertikalabstände zwischen Warnstab und unter Spannung setzbarem Bügel definieren, und mindestens eine vertikale Rinne 69, 71 zum Einklinken in den vertikalen Arm 14 des unter Spannung setzbaren Bügels 11. Im unteren Teil des Seitenteils 57 ist vorteilhaft ein Loch mit flachem, rechteckigem Querschnitt, in welchem der Horizontalschieber 61 horizontal verschiebbar ist. Der Horizontalschieber 61 hält in einem dafür vorgesehenen Loch oder einer Rinne einen Stab 63, welcher aus Metall sein kann. Die Seitenteile 57 und die Horizontalschieber 61 bestehen vorteilhaft aus Kunststoff, welcher den Warnstab 63 gegenüber dem unter Spannung setzbaren Bügel isoliert. Der Horizontalschieber 61 hat vorteilhaft einen flachen rechteckigen Querschnitt, damit er als Feder für den Warnstab 63 wirkt. Ein Verschieben des Warnstabes 63 vom unter Spannung setzbaren Bügel 11 weg bewirkt, dass der Federwiderstand abnimmt und der Abstand zwischen Warnstabes 63 und Kontaktglied 12 grösser wird. Das Seitenteil 57 ist vorteilhaft symmetrisch ausgebildet, d.h. mit zwei vertikalen Rinnen 69 und 71 zum Einhängen in den rechten oder linken vertikalen Arm 14 des unter Spannung setzbaren Bügels 11. Dieses Modell weist den Vorteil auf, dass der benötigte Druck, um den Warnstab so weit hoch zu drücken, dass der unter Spannung setzbare Bügel 11 berührt wird über die ganze Breite des Bügels 11 annähernd gleich bleibt.

Figur 7 zeigt den unter Spannung setzbaren Bügel 11 eines üblichen Kuhtrainers mit einem aufgesteckten und mit einer Schraube festgeschraubten, in der Höhe verstellbaren Seitenteil 13a. Dieses Seitenteil 13a besteht aus einem Metallstab 15 mit einem Einhängering 17 für beispielsweise ein Drahtseil 19, und mit einer Führungshülse 21, welche über einen Arm des Bügels 11 geschoben und mit der Schraube 25 arretiert ist. Im Einhängering 17 ist eine Spiralfeder 27 eingehängt, welche das Drahtseil mit der nötigen Spannung versieht. Das Drahtseil 19 ist isoliert, z.B. mit einer Kunststoffummantelung 29, oder mittels Kunststoff-Befestigungsklemmen (nicht dargestellt), oder mit einem Kunststoffauge in der Drahtseilöse. Die Spiralfeder 27 kann verschieden stark gewählt werden, um den notwendigen Druck auf den Warneinrichtung zu erhöhen oder zu senken.

Figur 8 zeigt eine weitere Variante eines Nachrüstteils. Dieses besteht aus einem rund oder eckig gebogenem Flacheisen oder eines entsprechend geformten Kunststoffteils 31 als Seitenteil 13b, welches an beiden Enden ein Loch oder einen Einschnitt aufweist. Mit dem einen Loch 33 ist es in einen Arm des Bügels 11 eingeführt und im Einschnitt 35 ist ein Befestigungsring 27 eingehängt und daran ein Gummizug 39 befestigt. Allenfalls kann der Gummizug 39 auch direkt im Einschnitt 35 des Seitenteiles 13b eingehängt sein. Sollte sich das Vieh mit den Hörnern im Seil verfangen, springt dieses bei Zug von der Krippe weg aus dem Einschnitt heraus. Der Zug des Gummizuges 39 ist durch dessen Länge und Dicke bestimmt und macht, dass das Metallteil 31 sich mit den Lochkanten 41 und 42 am unter Spannung setzbaren Bügel 11 verkantet. Das Metallteil 31 kann durch ankippen von Hand gelöst und vertikal verschoben werden.

## Patentansprüche

1. Verfahren zur Angewöhnung von Rindvieh (2), beim Koten oder Harnen im Stall soweit nach hinten zu treten, dass die Exkremente (4) im dafür vorgesehenen Bereich hinter dem Läger (3) abgesetzt werden, bei welchem das Tier bei Fehlverhalten z.B. mit einem Stromstoss bestraft wird, **dadurch gekennzeichnet**, dass das Tier bei Eindringen in einen definierten straffreien Grenzbereich seiner Bewegungsfreiheit vor der drohenden Bestrafung über mindestens einen seiner Sinne automatisch gewamt wird.

2. Vorrichtung zur Angewöhnung von Rindvieh (2), beim Koten oder Harnen im Stall soweit nach hinten zu treten, dass die Exkremente (4) im dafür vorgesehenen Bereich hinter dem Läger (3) abgesetzt werden, mit einem an einer Spannungsquelle angeschlossenen elektrischen Leiter (7) über dem Läger (3) und daran einem Bügel (11) mit wenigstens einem Arm (14) und einem Kontaktglied (12) in einem Abstand über dem Rücken des Tieres (2), und mit einem Schalter zwischen Kontaktglied (12) und Leiter (7), welcher nach Anheben des Kontaktgliedes (12) um einen gewissen Weg einen elektrischen Kontakt herstellt, wonach über das Kontaktglied (12) das dieses anhebende Tier (2) einem Stromschlag ausgesetzt werden kann, **dadurch gekennzeichnet**, dass das Kontaktglied (12) dank einem Widerstand gegen die unerwünschte, einschaltende Bewegung, welcher vom Tier (2) als Wamung wahrgenommen wird, als Wamglied dient.

3. Vorrichtung zur Angewöhnung von Rindvieh (2), beim Koten oder Harnen im Stall soweit nach hinten zu treten, dass die Exkremente (4) im dafür vorgesehenen Bereich hinter dem Läger (3) abgesetzt werden, mit einem an einer Spannungsquelle angeschlossenen elektrischen Leiter (7) über dem Läger (3) und daran einem Bügel (11) mit wenigstens einem Arm (14) und einem Kontaktglied (12) in einem Abstand über dem Rücken des Tieres (2), über welches Kontaktglied (12) das Tier (2) bei Fehlverhalten einem Stromschlag ausgesetzt werden kann, **dadurch gekennzeichnet**, dass das Kontaktglied (12) in ständigem elektrischen Kontakt mit der Spannungsquelle steht und dass ein Warnglied (19,39,43,62,63,72) zwischen dem Rücken des Tieres und dem Kontaktglied (12) angeordnet ist.

4. Vorrichtung nach Anspruch 3, dadurch gekennzeichnet, dass das Warnglied (19,39,43,62,63,72) beweglich oder verformbar ist und parallel zum Kontaktglied (12) verläuft.

5. Vorrichtung nach einem der Ansprüche 2 bis 4, dadurch gekennzeichnet, dass der Bügel (11) mit zwei Armen (14) am Leiter (7) befestigt ist.

6. Vorrichtung nach einem der Ansprüche 2 bis 5, dadurch gekennzeichnet, dass eine Wameinrichtung mit einem Warnglied (19,39,43,62,63,72) mit einem bestehenden Bügel (11) oder mit einem neuen Bügel zusammen anstelle eines bestehenden Bügels (11) am Leiter befestigt ist.

7. Vorrichtung nach einem der Ansprüche 2 bis 5, dadurch gekennzeichnet, dass eine Warneinrichtung (10) mit einem Warnglied (62) unabhängig vom Bügel (11) befestigt ist.

8. Vorrichtung nach einem der Ansprüche 2 bis 7, dadurch gekennzeichnet, dass das Warnglied eine Leiste (72) oder ein Stab (62,63) ist.

9. Vorrichtung nach einem der Ansprüche 2 bis 7, dadurch gekennzeichnet, dass das Warnglied ein gespanntes Seil (19,39,43) ist.

10. Vorrichtung nach einem der Ansprüche 3 bis 9, dadurch gekennzeichnet, dass die Wameinrichtung (10, 72) das Kontaktglied weitgehend isolierend abdeckt.

11. Vorrichtung nach Anspruch 10, dadurch gekennzeichnet, dass die Warneinrichtung (10) als U-förmige Schiene (72) ausgebildet ist, die über den horizontalen Stab (12) des Bügels (11) gehängt ist.

12. Vorrichtung nach einem der Ansprüche 2 bis 11, dadurch gekennzeichnet, dass das Warnglied (19,39,43,62,63,72) mittels Federmitteln (27,43,60,61,75) und/oder der Schwerkraft in seiner Grundstellung gehalten wird.

13. Vorrichtung nach einem der Ansprüche 2 bis 12 mit einem am Leiter in der Höhe verstellbarer Bügel, dadurch gekennzeichnet, dass der Bügel im Bereich des Arms oder der Arme Noppen, Rippen oder Rillen aufweist.
